# EUROPEAN PATENT SPECIFICATION

(11) **EP 4 362 656 B1**
(45) Date of publication and mention of the grant of the patent: **22.10.2025**
(21) Application number: 22737662.1
(22) Date of filing: 24.06.2022
(51) Int. Cl.: A01D 45/26

(54) **HARVESTING MACHINE**
ERNTEMASCHINE
MACHINE DE RÉCOLTE

(30) Priority: 28.06.2021 GB 202109247
(43) Date of publication of application: 08.05.2024
(73) Proprietor: Upcycled Plant Power (UPP) Limited, Edgmond Newport, Shropshire TF10 8JZ (GB)
(72) Inventor: STACE, Martin, Newport (GB)
(74) Representative: Craske, Stephen Allan
(86) International application number: PCT/IB2022/055880
(87) International publication number: WO 2023/275690

(56) References cited:
- US-A1- 2003 188 522
- US-B1- 6 378 281
- US-B2- 8 136 335

## Description

### TECHNICAL FIELD OF THE INVENTION

This invention relates to a harvesting machine for harvesting plant crops.

### BACKGROUND

The harvesting of plant crops such as lettuce, or brassicas like cabbage, broccoli and kale, is usually a manual process which is carried out by gangs of workers with knives. Considerable skill is required to select a suitable plant, identify part of the plant which is of a suitable size and shape to be harvested, and then remove it cleanly. Often the crop needs to be harvested over a period of a few weeks, removing crops which are ready for picking, but leaving smaller plants undamaged to continue their growth until they reach maturity. A skilled worker can harvest a considerable volume of plants in a day with little or no waste or damage to immature plants, but suitable labour is currently in short supply and labour costs are increasing.

Automatic harvesting machines are known, but they frequently cause considerable collateral damage to adjacent plants so that the whole crop has to be harvested in one pass. As a result, part of the crop may be past its best whilst immature plants may be left in the ground or picked and then manually discarded. It is not unknown for 50% or more of a potential crop to be wasted in this way. US 8136335 discloses a machine for harvesting crops of the known type.

The present invention seeks to provide a new and inventive form of harvesting machine which is capable of accurately selecting suitable plants for harvesting and cleanly removing them whilst leaving the remaining plants undamaged.

### SUMMARY OF THE INVENTION

The present invention concerns a harvesting machine which includes a mobile chassis having front and rear ends. At least two mutually spaced rows of grippers move relative to the chassis along a picking path which extends in a front-to-rear direction. Actuating means move the two rows of grippers towards each other to grip a selected plant. Two foliage deflectors at the beginning of the picking path are positioned on opposite sides of the selected plant. A foliage shield is mounted rearward of each foliage deflector and arranged to be interposed between the selected plant and the adjacent row of grippers, separating the grippers from the selected plant until they reach the gripping location.

The speed with which the rows of grippers move along the picking path is closely matched to the speed at which the mobile chassis travels in the forward direction so that the grippers remain substantially stationary relative to the ground while traveling along the picking path.

At the end of the picking path, the rows of grippers move along an upwardly inclined path to carry the selected plant clear of the ground. The grippers then release their grip on the selected plant.

In one embodiment the actuating means may co-operate with latches which engage rails so that grippers continue to hold the selected plant during travel along the upwardly inclined path.

### BRIEF DESCRIPTION OF THE DRAWINGS

The following description and the accompanying drawings referred to therein are included by way of non-limiting example in order to illustrate how the invention may be put into practice. In the drawings:
Figure 1 is a general view of a machine for harvesting plant crops;
Figure 2 is a detailed view showing a lower part of one gripper assembly of the machine;
Figure 3 is an enlarged detail showing the pusher assembly which operates the grippers;
Figure 4 is a further enlarged detail showing the operation of the gripper latches;
Figure 5 is a general view showing foliage deflectors which are mounted in front of the gripper assemblies;
Figure 6 is a general view of one of the foliage deflectors.

### DETAILED DESCRIPTION OF THE DRAWINGS

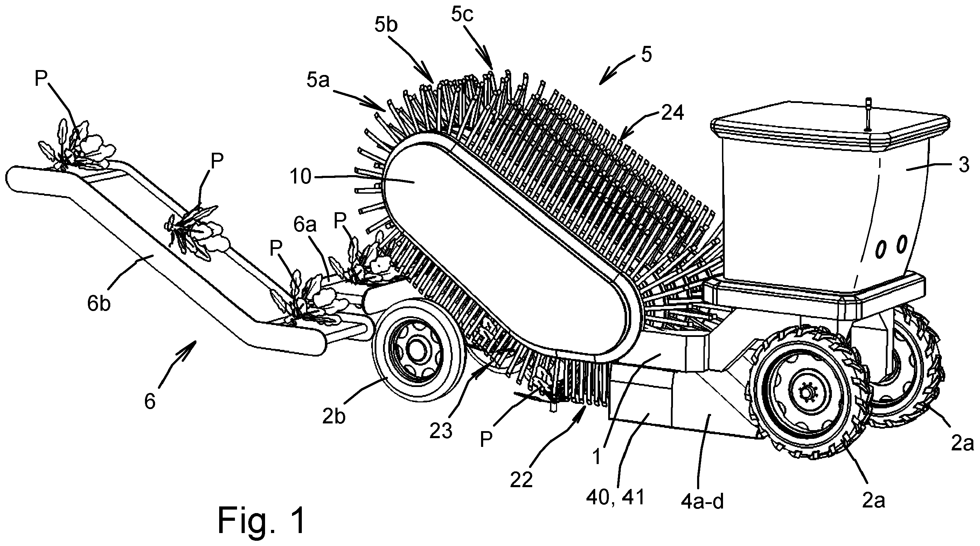

A harvesting machine of the kind described herein may be towed behind a tractor or other suitable vehicle. The machine may also be manually controlled either by remote radio operation or, in a larger machine, by a driver riding on the machine itself. In the present embodiment which is shown in **Fig. 1****,** the harvesting machine is an unmanned autonomous vehicle having a mobile chassis 1 with a front pair of wheels 2a mounted at a front end of the chassis and a rear pair of wheels 2b mounted at a rear end of the chassis. The front wheels 2a are steerable enabling the machine to accurately travel along one or more rows of plants P in a forward direction F. The vehicle is preferably an electric vehicle driven by an electric motor with servo-operated steering. The same motor may also drive an hydraulic pump for providing hydraulic power to the vehicle. The vehicle is preferably powered by batteries or a fuel cell fed by compressed hydrogen. Solar panels can also be included on the vehicle. The vehicle may be pre-programmed to move along a predetermined path, which is preferably augmented by artificial intelligence and computer vision. A completely autonomous vehicle could use sensor data generated during movement around a field, supplemented by precise localisation data. A crop map can thus be produced identifying individual plants and plotting the exact position and size of each plant in the field.

The vehicle may be controlled by a computer which is connected to a camera, or stereo vision cameras, and which uses a computer vision algorithm to detect crop plants in the image and calculate the position of each plant. Global positioning (GPS) receivers can be included to enable the vehicle to very accurately estimate its position and heading. Front stereo vision cameras could also be used to detect and range any obstacles in the path of the vehicle. Object detection and classification may use neural network algorithms, enabling the vehicle to automatically react depending on the nature of an obstacle. An alternative lidar sensor can be used to obtain redundant depth measurements.

In the illustrated embodiment a housing 3 is mounted on the front of the chassis 1 to contain batteries, a control computer and associated electronics. Immediately behind the front wheels 2a are mounted foliage deflectors 4a-d which are followed by a gripper system 5 which extends upwards above the rear wheels 2b. At the back of the vehicle there is a conveyor arrangement 6 comprising a cross conveyor 6a leading to a discharge conveyor 6b which is directed rearwards at one side of the vehicle.

In the present embodiment the gripper system 5 includes three parallel and substantially identical gripper assemblies 5a, 5b and 5c, which are spaced transversely across the harvesting machine, enabling three parallel rows of plants P to be harvested. It should however be noted that the machine may have any number of such gripper assemblies from one upwards, and sometimes as many as five. One such gripper assembly will now be described with reference to **Fig.s 2 to 4****,** noting that one of the side covers 10 which is shown in **Fig. 1** has been removed in the following drawings.

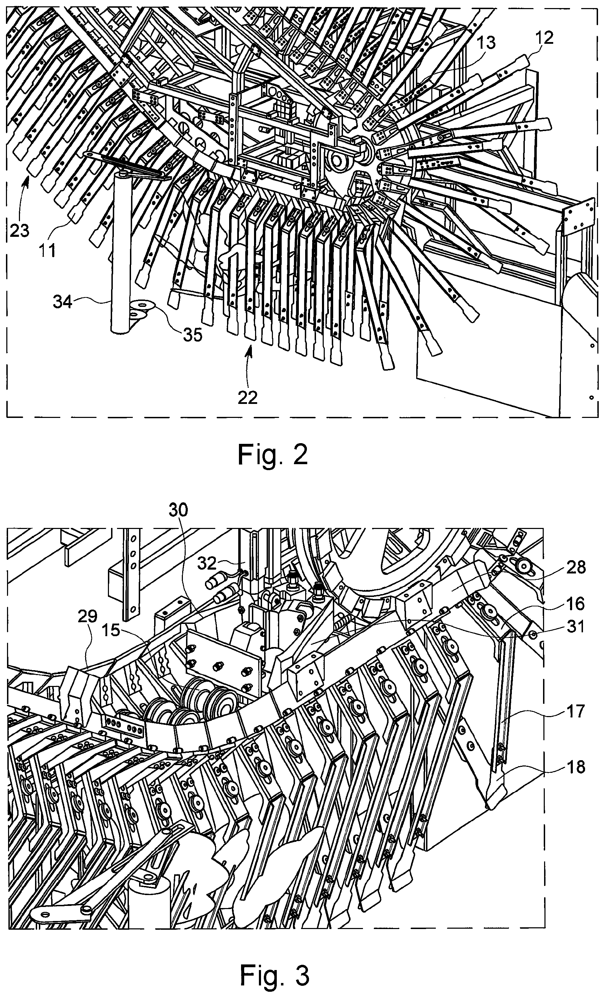

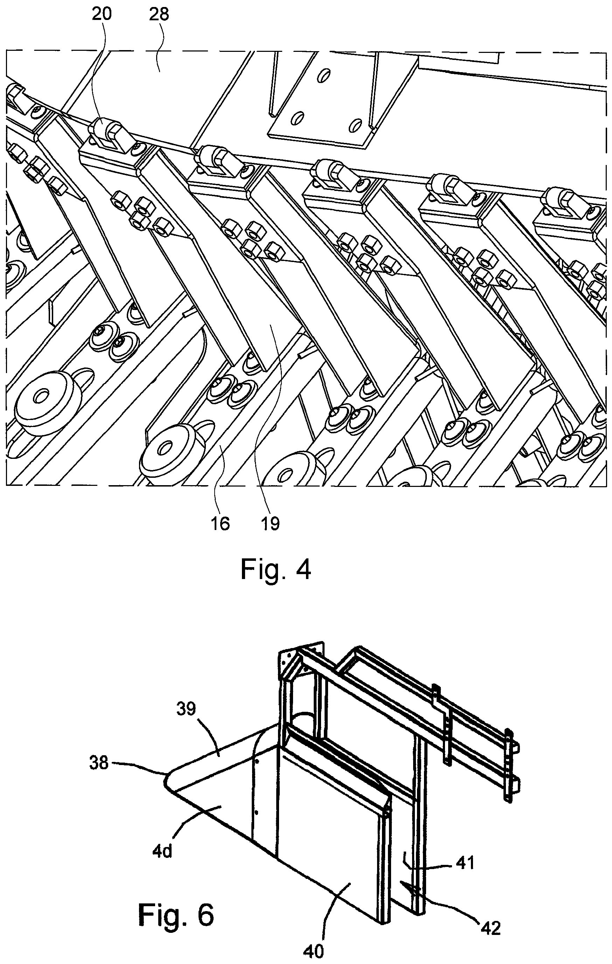

Referring particularly to **Fig. 2****,** each of the gripper assemblies 5a, 5b and 5c, comprises numerous grippers which are arranged in pairs in two spaced rows 11 and 12 carried by an endless gripper conveyor 13, e.g. comprising belts, chains, wire ropes or such like, such that the grippers move around a continuous loop. As can be seen in **Fig. 3****,** the conveyor 13 is entrained around spaced upper and lower sheaves 14 together with smaller sheaves 15. The grippers 11 and 12 may be of springy metal or plastic, and could for example comprise spring metal tines. The present grippers 11 and 12 include relatively short but telescopically adjustable first limbs 16, which project in opposite directions from the conveyor 13. The outer ends of the first limbs 16 carry longer depending limbs 17. These depending limbs may end in mutually opposed spring paddles 18 to reduce the risk of crop damage. In addition, as shown in **Fig. 4****,** each of the first limbs 16 is provided with a projecting latching finger 19 which in turn carries a respective latch element 20. The first limbs 16 are pivotably connected to the conveyor 13, arranged such that the second limbs 17 of each pair of grippers 11 and 12 normally adopt the substantially parallel position seen in **Fig. 2****.**

Referring back to **Fig. 1****,** the pairs of grippers travel in a closed circuit around the sheaves 14 and 15 moving in a rearward direction along a linear picking path 22 which is substantially parallel to the ground. They then travel past the smaller sheaves 15 **(****Fig. 3****),** which changes their direction to move along an inclined path 23, sloping upwardly relative to the picking path 22, before moving around the upper sheave 14 which is located above the transverse conveyor 6a. The grippers then travel along a return path 24 before traveling around the lower sheave 14 to re-join the picking path 22.

Referring again to **Fig. 3****,** a pair of spaced rails 28 and 29 extend along the picking path 22 above the respective rows of grippers 11 and 12, continuing along the upwardly inclined path 23. Between these rails 28, 29, is mounted a pair of pushers 30 and 31 which are each pivoted at their font ends to rotate about a vertical axis. The trailing rear ends of the pushers are normally spaced inward from the rails 28 and 29 but they can be operated to pivot outwards in opposite directions by a single hydraulic actuator 32. When so actuated, the pushers 30 and 31 contact the adjacent grippers 11 and 12 **(****Fig. 4****)** moving the latching fingers 19 outwards until the respective latches 20 engage and latch onto the rails. At the same time, the depending limbs 17 and spring paddles 18 move inwards towards each other into a gripping position, as shown in **Fig. 3****.**

Referring back to **Fig. 2****,** at the junction between the picking path 22 and the inclined path 23 a respective cutter assembly 34 is mounted adjacent to each of the gripper assemblies 5a, 5b and 5c. The cutters may be selectively actuated, when required, to move cutting blades 35, e.g. circular cutting discs, into position beneath the lower ends of the grippers 11 and 12.

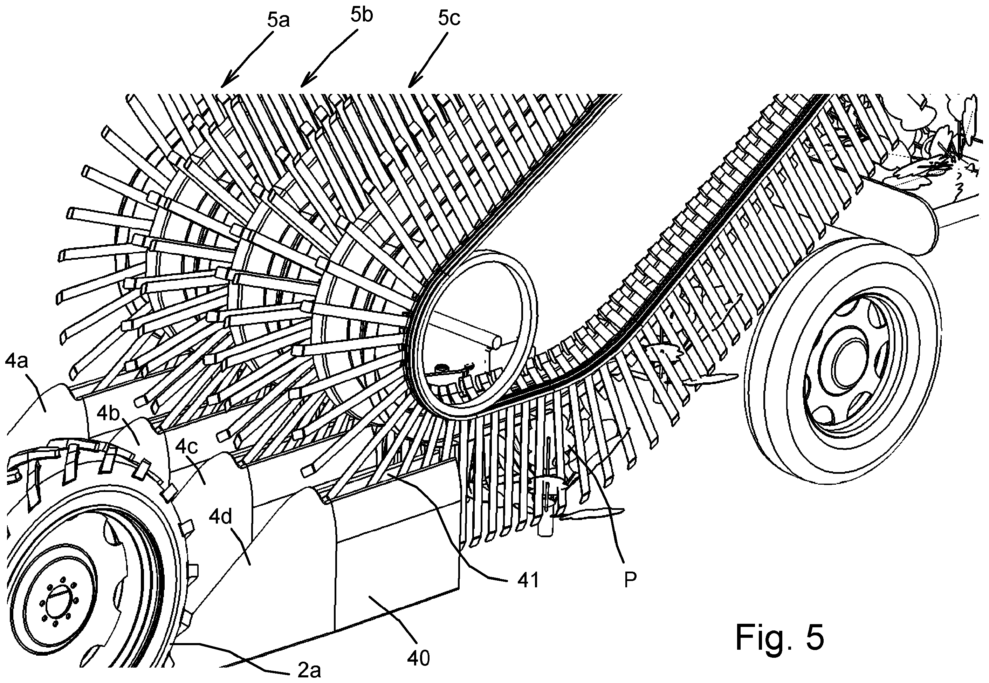

The rotational speed of the gripper assemblies 5a, 5b and 5c is linked to the forward speed of the vehicle, e.g. electronically or by mechanical gearing, so that the grippers 11 and 12 are substantially stationary relative to the ground as they move along the picking path 22. **Fig. 5** (next drawing sheet) shows the arrangement of the four foliage deflectors 4a-d which are located between the front wheels 2a and the start of the picking path 22. The foliage deflectors 4a-d are positioned between adjacent rows of plants, generally aligned with the grippers 11 and 12. The two outermost deflectors 4a and 4d are aligned with the outermost gripper rows 11 and 12 of the two outer gripper assemblies 5a and 5c whilst the two inner deflectors 4b and 4c are each aligned with two rows of grippers, 11 and 12, from two adjacent gripper assemblies. Each foliage deflector, one of which 4d is shown in **Fig. 6** (previous drawing sheet), has a leading nose 38 with an upwardly inclined rounded top face 39. The noses 38 of the foliage deflectors travel just above the surface of the ground, passing on opposite sides of each row of plants to be harvested so that the foliage deflectors raise the leaves of the plants and gently feed the foliage between the deflectors. In the case of a crop such as cauliflowers the leaves may enclose and protect the head during further handling.

In **Fig.s 5** **and** **6** it can be seen that the rear of each foliage deflector is provided with a pair of rearwardly-extending foliage shields 40 and 41 in the form of spaced substantially parallel walls, which together define a slot 42 which is open upwardly and rearwardly. As the grippers 11, 12 travel around the front sheave 14 they pass between the shields 40 and 41 entering through the top of the slot 42 and exiting through the rear end. Since the speed of the gripper assemblies 5a, 5b and 5c is linked to the speed of the vehicle the grippers 11 and 12 are substantially stationary relative to the ground as they exit from between the shields 40 and 41, and are therefore also stationary relative to a plant P which has just passed between the two foliage deflectors. Provided the plant has been selected for harvesting, e.g. according to a pick list map or on-board sensor, the actuator 32 operates and pivots the grippers 19 so that the latches 20 lock onto the rails 28 and 29. This latching operation causes the paddles 18 to move inwards as described, firmly gripping the plant. When the actuator 32 has been operated for a sufficient time to ensure that enough paddles have grabbed the plant the pushers 30 and 31 are allowed to withdraw and the cutting mechanism 38 is actuated so that the cutters 39 move below the grippers and sever the stem of the plant. With some crops the grippers could pull the plant out of the ground as an alternative to using cutters. In either case, the plant travels upward along the inclined path 23 whilst still firmly held by the grippers. When the plant has been raised sufficiently the latches 20 reach the end of the rails 28 and 29 and become disengaged therefrom so that the gripper paddles return to their default open positions. The plant is thereby released onto the conveyor system 6 for further processing or deposited directly into a receptacle.

Although some plants may be ready for sale without further trimming, e.g. lettuce, other plants such as broccoli may require manual trimming before sale. This can conveniently be done in a packing shed, or on the move by workers traveling behind the harvester.

In the case of plants which have not been identified for picking the pushers 30 and 31 are not actuated and grippers move upwards at the end of the picking path 22 still spaced from the plant. The plant is not therefore disturbed significantly, allowing it to continue growing to be harvested at a later date.

Although as little as 10% of the crop may be harvested at any one time the remainder of the crop can be harvested in several future passes so that as much as 100% of the usable crop may be harvested during a growing period.

In a machine intended for harvesting single rows of plants, or where the rows are relatively widely-spaced, it would not be essential for the two foliage deflectors on opposite sides of the row to be provided with outermost shields 40 and 41 since the grippers 11 and 12 are unlikely to damage adjacent crops. It should also be noted that it is not essential for the shields to be physically joined to the foliage deflectors as long as they are close enough to cause no significant damage to the foliage as they pass on opposite sides of the plants.

The harvesting machine described herein is therefore capable of accurately picking selected plant crops and cleanly removing them for packing or further processing whilst leaving unwanted plants undisturbed.

## Claims

1. A harvesting machine comprising:
- a mobile chassis (1) having front and rear ends to travel in a forward direction (F);
- two mutually spaced rows of grippers (11, 12) arranged to move relative to the chassis along a picking path (22) which extends in a front-to-rear direction;
- actuating means (30, 31, 32) to move the two rows of grippers towards each other at a gripping location positioned along the picking path to grip a selected plant (P);
**Characterised in that** the harvesting machine comprises:
- two foliage deflectors (4a-d) at the front end of the picking path positioned on opposite sides of the selected plant;
- a foliage shield (40, 41) mounted rearward of each foliage deflector and arranged to be interposed between the selected plant and the adjacent row of grippers and separate the grippers from the selected plant until they reach the gripping location.

2. A harvesting machine according to claim 1 wherein control means are provided to match the speed with which the rows of grippers (11, 12) move along the picking path (22) to the speed at which the mobile chassis (1) travels in the forward direction (F) whereby the grippers remain substantially stationary relative to the ground while traveling along the picking path.

3. A harvesting machine according to claim 1 wherein each foliage deflector (4a-d) has a leading nose (38) with an upwardly inclined top surface (39).

4. A harvesting machine according to claim 1 wherein, immediately following the picking path (22), the rows of grippers (11, 12) are arranged to move along an upwardly inclined path (23).

5. A harvesting machine according to claim 4 wherein the grippers (11, 12) are arranged to release their grip on the selected plant after moving along at least part of the upwardly inclined path (23).

6. A harvesting machine according to claim 1 wherein the grippers (11, 12) are connected to an endless conveyor (13) to travel in a continuous loop.

7. A harvesting machine according to claim 6 wherein the grippers (11, 12) are pivotably connected to the endless conveyor (13).

8. A harvesting machine according to claim 1 wherein the actuating means (30, 31, 32) co-operate with latches (20) which engage rails (28) to maintain the grip of grippers (11, 12) on the selected plant (P).

9. A harvesting machine according to claim 8 wherein the actuating means (30, 31, 32) comprises an actuator (32) which moves a pusher arrangement (30, 31) to engage the grippers (11, 12) with the rails (28).

10. A harvesting machine according to claim 8 wherein the rails (28) extend along the upwardly inclined path (23).

11. A harvesting machine according to claim 1 which includes a cutting device for severing plants from the ground while traveling along the picking path.

## Patentansprüche

1. Eine Erntemaschine, umfassend:
- ein fahrbares Fahrgestell (1) mit Vorder- und Hinterachse zur Vorwärtsfahrt (F);
- zwei voneinander beabstandete Greiferreihen (11, 12), die relativ zum Fahrgestell entlang eines Pflückpfads (22) beweglich sind, der sich von vorne nach hinten erstreckt;
- Betätigungsmittel (30, 31, 32) zum Annähern der beiden Greiferreihen an einer Greifstelle entlang des Pflückpfads zum Greifen einer ausgewählten Pflanze (P);
**Dadurch gekennzeichnet, dass** die Erntemaschine umfasst:
- zwei Laubabweiser (4a-d) am vorderen Ende des Pflückpfads, die sich auf gegenüberliegenden Seiten der ausgewählten Pflanze befinden;
- einen Laubschutz (40, 41), der hinter jedem Laubabweiser angebracht ist und zwischen der ausgewählten Pflanze und der benachbarten Greiferreihe angeordnet ist und die Greifer von der ausgewählten Pflanze trennt, bis sie die Greifstelle erreichen.

2. Erntemaschine nach Anspruch 1, wobei Steuermittel vorgesehen sind, um die Geschwindigkeit, mit der sich die Greiferreihen (11, 12) entlang des Pflückpfads (22) bewegen, an die Geschwindigkeit anzupassen, mit der sich das Fahrgestell (1) in Vorwärtsrichtung (F) bewegt. Dabei bleiben die Greifer während der Fahrt entlang des Pflückpfads im Wesentlichen ortsfest.

3. Erntemaschine nach Anspruch 1, wobei jeder Laubabweiser (4a-d) eine vordere Nase (38) mit einer nach oben geneigten Oberfläche (39) aufweist.

4. Erntemaschine nach Anspruch 1, wobei sich die Greiferreihen (11, 12) unmittelbar im Anschluss an den Pflückpfad (22) entlang eines nach oben geneigten Pfads (23) bewegen.

5. Erntemaschine nach Anspruch 4, wobei die Greifer (11, 12) so angeordnet sind, dass sie die ausgewählte Pflanze nach zumindest einem Teil des nach oben geneigten Pfads (23) freigeben.

6. Erntemaschine nach Anspruch 1, wobei die Greifer (11, 12) mit einem Endlosförderer (13) verbunden sind und sich in einer Endlosschleife bewegen.

7. Erntemaschine nach Anspruch 6, wobei die Greifer (11, 12) schwenkbar mit dem Endlosförderer (13) verbunden sind.

8. Erntemaschine nach Anspruch 1, wobei die Betätigungsmittel (30, 31, 32) mit Riegeln (20) zusammenwirken, die in Schienen (28) eingreifen, um den Griff der Greifer (11, 12) an der ausgewählten Pflanze (P) aufrechtzuerhalten.

9. Erntemaschine nach Anspruch 8, wobei die Betätigungsmittel (30, 31, 32) einen Aktuator (32) umfassen, der eine Schieberanordnung (30, 31) bewegt, um die Greifer (11, 12) mit den Schienen (28) in Eingriff zu bringen.

10. Erntemaschine nach Anspruch 8, wobei die Schienen (28) entlang des ansteigenden Pfades (23) verlaufen.

11. Erntemaschine nach Anspruch 1, die eine Schneidvorrichtung zum Abtrennen der Pflanzen vom Boden während der Fahrt entlang des Pflückpfades umfasst.

## Revendications

1. Machine de récolte comprenant :
- un châssis mobile (1) doté d'extrémités avant et arrière pour un déplacement vers l'avant (F) ;
- deux rangées de pinces (11, 12) espacées l'une de l'autre, conçues pour se déplacer par rapport au châssis le long d'un chemin de cueillette (22) s'étendant d'avant en arrière ;
- des moyens d'actionnement (30, 31, 32) pour rapprocher les deux rangées de pinces l'une de l'autre à un point de préhension situé le long du chemin de cueillette afin de saisir une plante sélectionnée (P) ;
**caractérisée en ce que** la machine de récolte comprend :
- deux déflecteurs de feuillage (4a-d) à l'extrémité avant du chemin de cueillette, positionnés de part et d'autre de la plante sélectionnée ;
- un bouclier de feuillage (40, 41) monté à l'arrière de chaque déflecteur de feuillage et conçu pour s'interposer entre la plante sélectionnée et la rangée de pinces adjacente et séparer les pinces de la plante sélectionnée jusqu'à leur arrivée au point de préhension.

2. Machine de récolte selon la revendication 1, dans laquelle des moyens de commande adaptent la vitesse de déplacement des rangées de pinces (11, 12) le long du chemin de cueillette (22) à la vitesse de déplacement du châssis mobile (1) vers l'avant (F), les pinces restant ainsi sensiblement immobiles par rapport au sol pendant leur déplacement le long du chemin de cueillette.

3. Machine de récolte selon la revendication 1, dans laquelle chaque déflecteur de feuillage (4a-d) possède un nez avant (38) dont la surface supérieure est inclinée vers le haut (39).

4. Machine de récolte selon la revendication 1, dans laquelle, immédiatement après le chemin de cueillette (22), les rangées de pinces (11, 12) sont disposées pour se déplacer le long d'un chemin incliné vers le haut (23).

5. Machine de récolte selon la revendication 4, dans laquelle les pinces (11, 12) sont disposées pour relâcher la prise sur la plante sélectionnée après avoir parcouru au moins une partie du chemin incliné vers le haut (23).

6. Machine de récolte selon la revendication 1, dans laquelle les pinces (11, 12) sont reliées à un convoyeur sans fin (13) pour se déplacer en boucle continue.

7. Machine de récolte selon la revendication 6, dans laquelle les pinces (11, 12) sont reliées de manière pivotante au convoyeur sans fin (13).

8. Machine de récolte selon la revendication 1, dans laquelle les moyens d'actionnement (30, 31, 32) coopèrent avec des loquets (20) qui s'engagent dans des rails (28) pour maintenir la prise des pinces (11, 12) sur la plante sélectionnée (P).

9. Machine de récolte selon la revendication 8, dans laquelle les moyens d'actionnement (30, 31, 32) comprennent un actionneur (32) qui déplace un poussoir (30, 31) pour engager les pinces (11, 12) dans les rails (28).

10. Machine de récolte selon la revendication 8, dans laquelle les rails (28) s'étendent le long du chemin incliné vers le haut (23).

11. Machine de récolte selon la revendication 1, comprenant un dispositif de coupe pour séparer les plantes du sol pendant le déplacement le long du chemin de cueillette.
